# EUROPÄISCHE PATENTSCHRIFT

(11) **EP 1 771 047 B1**
(45) Veröffentlichungstag und Bekanntmachung des Hinweises auf die Patenterteilung: **07.12.2016**
(21) Anmeldenummer: 06025049.5
(22) Anmeldetag: 13.09.2001
(51) Int. Cl.: H05B 41/36

(54) **Elektronisches Vorschaltgerät mit digitaler Steuereinheit**
Electronic ballast with a digital control unit
Ballast électronique avec une unité de commande numérique

(30) Priorität: 15.09.2000 DE 10045713; 13.06.2001 DE 10128586
(43) Veröffentlichungstag der Anmeldung: 04.04.2007
(62) Teilanmeldung aus: 01122012.6
(73) Patentinhaber: Tridonic GmbH & Co KG, 6851 Dornbirn (AT)
(72) Erfinder: Zudrell-Koch, Stefan, 6850 Dornbirn (AT)
(74) Vertreter: Rupp, Christian

(56) Entgegenhaltungen:
- EP-A- 0 830 982
- DE-A1- 4 335 375
- DE-A1- 19 708 791
- US-A- 5 463 287
- US-A- 5 680 015
- US-A- 5 705 897
- BUSO S ET AL: "Simple digital control improving dynamic performance of power preregulators" POWER ELECTRONICS SPECIALISTS CONFERENCE, 1997. PESC '97 RECORD., 28TH ANNUAL IEEE ST. LOUIS, MO, USA 22-27 JUNE 1997, NEW YORK, NY, USA,IEEE, US, Bd. 1, 22. Juni 1997 (1997-06-22), Seiten 103-109, XP010241534 ISBN: 0-7803-3840-5

## Beschreibung

Die vorliegende Erfindung betrifft ein elektronisches Vorschaltgerät zum Betreiben einer Gasentladungslampe nach dem Oberbegriff des Anspruches 1.

Der Einsatz elektronischer Vorschaltgeräte zum Betreiben von Gasentladungslampen führt wegen niedrigeren Vorschaltgeräteverlusten sowie einem verbesserten Lampenwirkungsgrad zu deutlichen Energieeinsparungen. Den Eingang eines elektronischen Vorschaltgeräts bildet üblicherweise ein an das Spannungsversorgungsnetz angeschlossenes Hochfrequenzfilter, welches mit einer Gleichrichterschaltung verbunden ist. Die von der Gleichrichterschaltung gleichgerichtete Versorgungsspannung wird nachfolgend einer Glättungsschaltung zum Erzeugen einer Zwischenkreisspannung zugeführt, ein mit der Zwischenkreisspannung gespeister Wechselrichter erzeugt schließlich eine hochfrequente Wechselspannung, welche an den Lastkreis mit der darin angeordneten Gasentladungslampe angelegt wird. Das Betreiben der Lampe mit der hochfrequenten Wechselspannung hat eine Verringerung der Elektrodenverluste sowie eine Steigerung der Lichtausbeute in der positiven Säule der Lampe zur Folge.

Ein elektronisches Vorschaltgerät der oben beschriebenen Art ist beispielsweise aus der WO 99/34647 A1 bekannt, wobei ein sicherer und zuverlässiger Betrieb durch zwei voneinander getrennte Regelkreise gewährleistet wird. Der erste Regelkreis betrifft die Glättungsschaltung und hat die Aufgabe, die von der Glättungsschaltung erzeugte Zwischenkreisspannung zu stabilisieren. Dies ist erforderlich, da die Ausgangsleistung des Vorschaltgerätes veränderlich ist und die Glättungsschaltung die hierzu erforderliche Leistung bereitstellen muß, wobei sich eine Änderung der Ausgangsleistung automatisch auf die Zwischenkreisspannung auswirkt. Darüber hinaus wird durch ein geeignetes Betreiben der Glättungsschaltung das Rückstrahlen von Oberwellen ins Netz reduziert.

Der zweite Regelkreis betrifft den Wechselrichter zum Betreiben der Gasentladungslampe, wobei die Regelung derart erfolgt, daß die Lampe mit einer gewünschten Leistung oder Helligkeit betrieben wird. Die Steuerschaltung hierfür wird durch eine anwendungsspezifische integrierte Schaltung (Application Specific Integrated Circuit - ASIC) gebildet, der mehrere Betriebsparameter in Form von analogen Eingangssignalen zugeführt werden. Intern werden diese Eingangssignale mit Hilfe von Komparatoren mit Referenzwerten verglichen und in "quasi-digitale" Signale umgewandelt, d.h., ein Komparator entscheidet, ob das Eingangssignal oberhalb oder unterhalb des Referenzwertes liegt. Anhand dieser Information erfolgt dann die Ansteuerung des Wechselrichters.

Der vorliegenden Erfindung liegt die Aufgabe zugrunde, ein Vorschaltgerät der eingangs beschriebenen Art derart weiterzuentwickeln, daß dieses kostengünstig und in seinen Abmessungen äußerst kompakt hergestellt werden kann. Gleichzeitig soll eine hohe Betriebssicherheit gewährleistet werden.

Die Aufgabe wird durch ein elektronisches Vorschaltgerät, welches die Merkmale des Anspruches 1 aufweist, gelöst. Das erfindungsgemäße Vorschaltgerät enthält zunächst eine an eine Wechselspannungsquelle anschließbare Gleichrichterschaltung, eine an den Ausgang der Gleichrichterschaltung angeschlossene Glättungsschaltung zum Erzeugen einer Zwischenkreisspannung und einen mit der Zwischenkreisspannung gespeisten Wechselrichter, an dessen Ausgang ein Anschlüsse für die Lampe enthaltender Lastkreis angeschlossen ist. Die Glättungsschaltung wird durch einen Schaltregler gebildet, wobei eine Steuerschaltung vorgesehen ist, welche mindestens einen Betriebsparameter der Glättungsschaltung erfaßt und einen steuerbaren Schalter des Schaltreglers in Abhängigkeit von dem erfaßten Betriebsparameter ansteuert.

Erfindungsgemäß weist die Steuerschaltung einen Analog/Digital-Wandler auf, der den erfaßten Betriebsparameter in einen aus mindestens 2 bit bestehenden Digitalwert umsetzt. Auf Basis dieses Digitalwerts berechnet die Steuerschaltung innerhalb eines digitalen Regelkreises anschließend eine Schaltinformation zum Betreiben des Schalters und übermittelt diese an eine Treiberschaltung, welche die Schaltinformation in ein entsprechendes Steuersignal zum Ansteuern des Schalters umsetzt.

Die erfindungsgemäße Lösung besteht somit darin, die Regelung der Zwischenkreisspannung digital zu realisieren, wobei mit einer Genauigkeit von mehr als 2 bit gerechnet wird. Hierzu ist anzumerken, daß die aus der WO 99/34647 A1 bekannte "quasi-digitale" Ansteuerung des Wechselrichters bei einer Regelung der Zwischenkreisspannung zu Instabilitätsproblemen führen würde, was darauf zurückzuführen ist, daß durch einen einfachen Vergleich von Betriebsparametern mit Referenzwerten keine ausreichend hohe Genauigkeit und damit letztendlich auch keine Stabilität erzielt werden kann. Im Gegensatz dazu kann bei der erfindungsgemäßen digitalen Regelung zum einen eine sehr hohe Stabilität erzielt werden, zum anderen nimmt eine digitale Schaltung nur wenig Platz in Anspruch, so daß das Vorschaltgerät insgesamt kleiner gestaltet werden kann.

Weiterbildungen der Erfindung sind Gegenstand der Unteransprüche.

Bei dem zur Regelung der Zwischenkreisspannung erfaßten Betriebsparameter kann es sich um die Zwischenkreisspannung und/oder die Eingangsspannung der Glättungsschaltung handeln. Vorzugsweise wird die Glättungsschaltung durch einen Hochsetzsteller gebildet, wobei dann zusätzlich oder alternativ zu den oben erwähnten Betriebsparametern auch der durch eine Induktivität des Hochsetzstellers fließende Strom bzw. ein diesem Strom entsprechender Parameter erfaßt werden kann.

Eine besonders vorteilhafte Weiterbildung der Erfindung besteht ferner darin, daß die Steuerschaltung zusätzlich auch für die Ansteuerung des Wechselrichters verantwortlich ist und hierzu zumindest einen Betriebsparameter des Lastkreises erfaßt. Analog zum Regelkreis für die Zwischenkreisspannung wird auch der Betriebsparameter des Lastkreises mit Hilfe eines Analog/Digital-Wandlers in einen aus mindestens 2 bit bestehenden Digitalwert umgesetzt, wobei die Steuerschaltung mit Hilfe eines zweiten digitalen Regelkreises auf Basis dieses Digitalwerts eine Schaltinformation zum Betreiben des Wechselrichters berechnet. Hierzu können beispielsweise die Lampenspannung und/oder der Lampenstrom erfaßt werden. Der Kerngedanke dieser Weiterbildung besteht darin, beide Regelkreise des Vorschaltgerätes in eine einzige Steuerschaltung digital zu integrieren, so daß die gesamte Schaltung auf einem einzigen ASIC angeordnet werden kann.

Vorzugsweise weist die Steuerschaltung lediglich einen einzigen Analog/DigitalWandler auf, der zum Umsetzen der für die verschiedenen Regelvorgänge erfaßten Betriebsparameter in digitale Werte im Zeitmultiplex arbeitet.

Um die Regeleigenschaften der Steuerschaltung auf die verschiedenen Betriebszustände der Lampe abstimmen zu können, weist die Steuereinheit vorzugsweise einen Betriebszustands-Steuerblock auf, der eine Betriebszustands-Information erzeugt und an den oder die digitalen Regelkreise zum Betreiben des Schaltreglers bzw. des Wechselrichters übermittelt, wobei diese Betriebszustands-Informationen die Berechnung der Schaltinformationen in den Regelkreisen beeinflussen. Dadurch wird ermöglicht, daß während einer Vorheizphase, einer Zündphase oder eines Normalbetriebs der Gasentladungslampe verschiedene und auf die jeweilige Betriebsphase optimierte Regeleigenschaften vorliegen. Darüber hinaus kann vorgesehen sein, daß die Steuereinheit einen Taktgeber aufweist, der an die verschiedenen Komponenten der Steuereinheit ein gemeinsames Taktsignal übermittelt. Im folgenden soll die Erfindung anhand der beiliegenden Zeichnung, die ein erfindungsgemäßes Vorschaltgerät schematisch darstellt, näher erläutert werden.

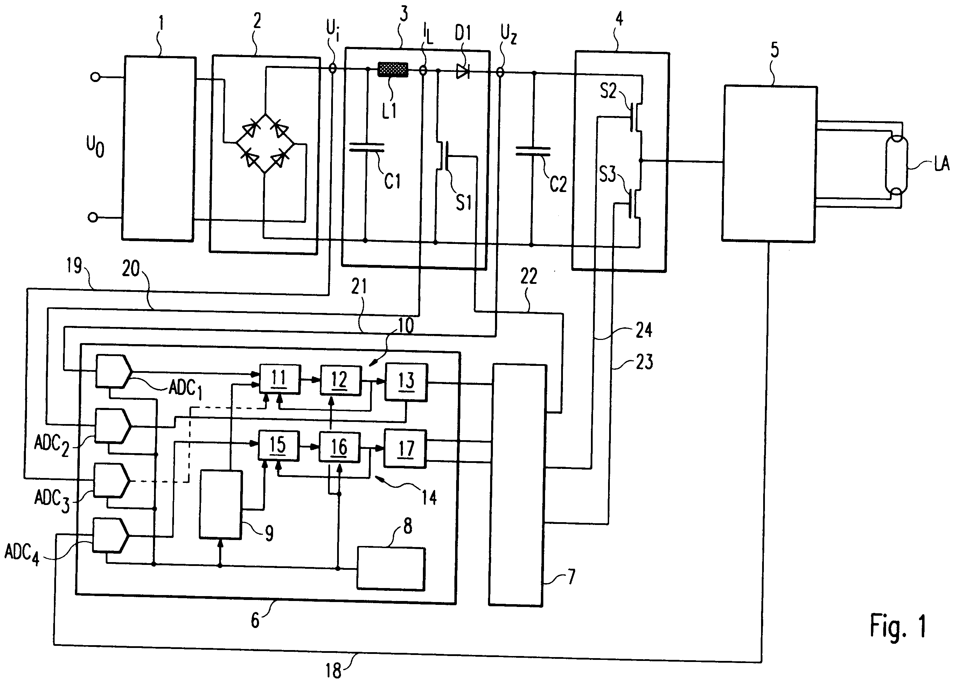

Das in der einzigen Figur 1 dargestellte Vorschaltgerät ist eingangsseitig über ein Hochfrequenzfilter 1 an die Netzversorgungsspannung U₀ angeschlossen. Am Ausgang des Hochfrequenzfilters 1 befindet sich eine Gleichrichterschaltung 2 in Form eines Vollbrückengleichrichters, welche die Netzversorgungsspannung U₀ in eine gleichgerichtete Eingangsspannung Uᵢ für die Glättungsschaltung 3 umsetzt. Diese Glättungsschaltung 3 dient zur Oberwellenfilterung und Glättung der Eingangsspannung Uᵢ und umfaßt einen Glättungskondensator C1 sowie einen eine Induktivität L1, einen steuerbaren Schalter in Form eines MOS-Feldeffekttransistors S1 und eine Diode D1 aufweisenden Hochsetzsteller. Anstelle des Hochsetzstellers können allerdings auch andere Schaltregler verwendet werden.

Durch ein entsprechendes Schalten des MOS-Feldeffekttransistors S1 wird in bekannter Weise eine über dem sich an die Glättungsschaltung 3 anschließenden Speicherkondensator C2 anliegende Zwischenkreisspannung U_{z} erzeugt, die dem Wechselrichter 4 zugeführt wird. Dieser Wechselrichter 4 wird durch zwei weitere in einer Halbbrückenanordnung angeordnete MOS-Feldeffekttransistoren S2 und S3 gebildet. Durch ein hochfrequentes Ansteuern der beiden Feldeffekttransistoren S2, S3 wird an deren Mittenabgriff eine Wechselspannung erzeugt, die dem Lastkreis 5 mit der daran angeschlossenen Gasentladungslampe LA zugeführt wird. Dies erfolgt in bekannter Weise und soll daher im Folgenden nicht ausführlicher erläutert werden.

Das Ansteuern der drei MOS-Feldeffekttransistoren S1-S3 der Glättungsschaltung 3 und des Wechselrichters 4 erfolgt durch eine Steuerschaltung 6, welche entsprechende Schaltinformationen erzeugt und an eine sich an die Steuerschaltung 6 anschließende Treiberschaltung 7 übermittelt. Die Treiberschaltung 7 setzt die Schaltinformationen in entsprechende Steuersignale um und steuert über die Leitungen 22-24 die Gates der drei MOS-Feldeffekttransistoren S1-S3 an. Dies erfolgt unter Berücksichtigung einer Reihe von Betriebsparametern, die der Steuerschaltung 6 eingangsseitig zugeführt werden. Dabei werden über die Eingangsleitung 18 Betriebsparameter des Lastkreises erfaßt, über die Leitungen 19-21 werden zum Regeln der Zwischenkreisspannung U_{Z} erforderliche Betriebsparameter übermittelt. Die Eingangsleitung 19 dient dabei zum Übertragen eines der gleichgerichteten Versorgungswechselspannung Uᵢ entsprechenden Signals, mit Hilfe der Eingangsleitungen 20 und 21 werden der durch die Induktivität L1 fließende Strom I_{L} - genauer genommen ein diesem Strom I_{L} entsprechender Parameter - und die Zwischenkreisspannung U_{Z} selbst erfaßt.

Innerhalb der Steuerschaltung 6 sind mehrere Analog/Digital-Wandler ADC₁ - ADC₄ sowie zwei digital arbeitende Regelkreise 10 und 14 angeordnet, wobei der erste Regelkreis 10 für das Ansteuern des Schalters S1 der Glättungsschaltung 3 und der zweite Regelkreis 14 für das Ansteuern des Wechselrichters 4 zuständig ist. Die beiden Regelkreise 10 und 14 bestehen jeweils aus einem Rechenblock 11 bzw. 15, einem Speicher-Register 12 bzw. 16 und einem Ausgangsblock 13 bzw. 17 zum Abgeben der Schaltinformation an die Treiberschaltung 7.

Darüber hinaus ist ein Betriebszustands-Steuerblock 9 vorgesehen, der den beiden Rechenblöcken 11 und 15 der Regelkreise 10 und 14 Betriebszustands-Informationen bezüglich der aktuellen Betriebsphase der Gasentladungslampe LA übermittelt. Sämtliche Komponenten der Steuereinheit 6 werden über einen zentralen Taktgeber 8 synchronisiert, der den Komponenten entsprechende Taktsignale übermittelt. Die Steuereinheit 6 ist als anwendungsspezifische integrierte Schaltung (Application Specific Integrated Circuit - ASIC) ausgebildet und nimmt dementsprechend nur wenig Platz ein.

Im folgenden soll die Funktionsweise des ersten Regelkreises 10 zur Regelung der Zwischenkreisspannung U_{Z} erläutert werden. Hierzu werden die drei bereits oben erwähnten Betriebsparameter - die Eingangsspannung Uᵢ, ein dem Induktivitätsstrom I_{L} entsprechender Parameter und die Zwischenkreisspannung U_{Z} von der Steuereinheit 6 erfaßt und mit Hilfe von Analog/Digital-Wandlern ADC₁ - ADC₃ in digitale Werte mit einer Genauigkeit von mindestens 2 bit, vorzugsweise von 12 bit, umgesetzt.

Für diesen ersten Regelkreis 10 ist der von dem ersten Analog/Digital-Wandler ADC₁ erzeugte Digitalwert der Zwischenkreisspannung U_{Z} von vorrangiger Bedeutung, der zunächst dem Rechenblock 11 zugeführt wird. Anhand dieses Wertes berechnet der Rechenblock 11 eine entsprechende Steuerinformation für den MOS-Feldeffekttransistor S1 in Form eines Digitalwertes, der in dem Speicher-Register 12 abgelegt wird. Dieser Wert beinhaltet Informationen über die erforderliche Einschaltdauer oder das Tastverhältnis für den Schalter S1.

Dabei erfolgt die Berechnung - wie durch die Pfeile schematisch angedeutet - unter Berücksichtigung des aktuellen Wertes in dem Speicher-Register 12 und der von dem Betriebszustands-Steuerblock 9 übertragenen Betriebszustands-Information. Die Berücksichtigung dieser Betriebszustands-Information gewährleistet, daß die Regeleigenschaften auf den aktuellen Betriebszustand der Lampe LA abgestimmt werden können, was deswegen von Bedeutung ist, da in unterschiedlichen Betriebsphasen unterschiedliche dynamische Regeleigenschaften gewünscht werden. So ist es während des Zündvorgangs der Lampe wünschenswert, möglichst schnelle Regeleigenschaften zu erzielen, um die in dieser Phase auftretenden großen Leistungsänderungen ausgleichen zu können. Während des Normalbetriebs der Lampe hingegen sollte eine Regeldynamik vorliegen, bei der in erster Linie das Entstehen von Oberwellen unterdrückt wird.

Der in dem Speicher-Register 12 abgelegte Wert wird schließlich von dem Ausgangsblock 13 des Regelkreises 10 in eine entsprechende Schaltinformation umgesetzt und an die Treiberschaltung 7 übermittelt, die ein dementsprechendes Steuersignal zum Betreiben des MOS-Feldeffekttransistors S1 über die Leitung 22 überträgt.

Der Ausgangsblock 13 berücksichtigt dabei den von dem zweiten Analog/DigitalWandler ADC₂ erzeugten und dem Induktivitätsstrom I_{L} entsprechenden Digitalwert. Hierdurch kann sichergestellt werden, daß ein Schalten des Transistors S1 bei einem Nulldurchgang des Induktivitätsstroms I_{L} erfolgt, wodurch die auftretenden Schaltungsverluste minimiert werden.

Eine Erweiterung der bisher beschriebenen Funktionsweise des ersten Regelkreises 10 erfolgt dadurch, daß bei der Berechnung der Schaltinformationen der Digitalwert der Eingangsspannung Uᵢ ebenfalls von dem Rechenblock 11 berücksichtigt wird, und zwar derart, daß die für den Schalter S1 berechneten Einschaltzeiten verlängert werden, wenn der aktuelle Wert der Eingangsspannung Uᵢ auf niedrige Werte absinkt. Hierdurch wird der bei einem Hochsetzsteller normalerweise auftretende Effekt berücksichtigt, daß der Strom durch die Induktivität L1 kurz vor einem Nulldurchgang der Eingangsspannung Uᵢ sprunghaft auf Null fällt und nach dem Nulldurchgang erst mit einem gewissen Abstand wieder einsetzt. In diesem Zeitraum sind Strom und Spannung nicht in Phase, was zu Oberwellen führt, die als Störungen ins Netz zurückstrahlen können. Durch die Verlängerung der Einschaltzeiten kann dieser Effekt allerdings unterdrückt werden, so daß die Betriebseigenschaften des Vorschaltgeräts nochmals verbessert werden. Dies stellt allerdings lediglich eine Ergänzung der zuvor beschriebenen Regelung dar und ist nicht zwingend erforderlich.

Es ist anzumerken, daß entgegen der schematischen Darstellung in Fig. 1 die Steuerschaltung 6 in Praxis vorzugsweise lediglich einen einzigen Analog/DigitalWandler aufweist, der im Zeitmultiplex betrieben wird und die über die Eingangsleitungen 19-21 zugeführten Betriebsparameter nacheinander in die benötigten Digitalwerte umsetzt. Auch die Umsetzung der von dem Lastkreis 5 erfaßten Betriebsparameter für die nachfolgend beschriebene Regelung des Wechselrichters 4 erfolgt durch diesen einzigen Analog/Digital-Wandler.

Die Steuerung des Wechselrichters 4 mit Hilfe des zweiten Regelkreises 14 erfolgt in ähnlicher Weise wir die Regelung der Zwischenkreisspannung, wobei dem Rechenblock 15 der von dem vierten Analog/Digital-Wandler ADC₄ bzw. dem im Zeitmultiplex arbeitenden gemeinsam genutzten Analog/Digital-Wandler erzeugte digitale Betriebsparameter zugeführt und in Abhängigkeit davon eine entsprechende Schaltinformation an die Treiberschaltung 7 berechnet und übertragen wird. Auch hier werden mit Hilfe des Betriebszustands-Steuerblocks 9 in verschiedenen Betriebsphasen der Lampe LA unterschiedliche Regeleigenschaften realisiert.

Das dargestellte erfindungsgemäße Konzept eines voll-digital arbeitenden Reglers für die Zwischenkreisspannung und den Wechselrichter bietet somit die Möglichkeit, das Vorschaltgerät kostengünstiger und kompakter herzustellen. Darüber hinaus kann die Regelung deutlich genauer aber auch flexibler durchgeführt werden, so daß neben den oben genannten Vorteilen auch die Leistungsfähigkeit des Vorschaltgeräts erhöht wird.

## Patentansprüche

1. Elektronisches Vorschaltgerät für mindestens eine Gasentladungslampe (LA), mit einer an eine Wechselspannungsquelle (Uo) anschliessbaren Gleichrichterschaltung (2), einer an den Ausgang der Gleichrichterschaltung (2) angeschlossenen Glättungsschaltung (3) zum Erzeugen einer Zwischenkreisspannung (U_{Z}) und einem mit der Zwischenkreisspannung (U_{Z}) gespeisten Wechselrichter (4), an dessen Ausgang ein Anschlüsse für die Lampe (LA) enthaltender Lastkreis (5) angeschlossen ist,
wobei die Glättungsschaltung (3) durch einen Schaltregler mit einer Induktivität (L1) gebildet wird und das Vorschaltgerät ferner eine Steuerschaltung (6) aufweist, welche mindestens einen Betriebsparameter (Uᵢ, I_{L}, U_{z}) der Glättungsschaltung (3) erfasst und einen steuerbaren Schalter (S1) des Schaltreglers in Abhängigkeit von dem Wert des erfassten Betriebsparameters (Uᵢ, I_{L}, U_{z}) ansteuert um die Zwischenkreisspannung (Uz) zu stabilisieren,
wobei die Steuerschaltung (6) einen Analog/Digital-Wandler (ADC1) zum Umsetzen des erfassten Betriebsparameters (Uᵢ, I_{L}, U_{z}) der Glättungsschaltung (3) in einen aus mindestens 2 bit bestehenden Digitalwert aufweist,
wobei die Steuerschaltung (6) auf Basis dieses Digitalwerts in einem digitalen Regelkreis (14) eine Schaltinformation zum Betreiben des steuerbaren Schalters (S1) des Schaltreglers berechnet und an eine Treiberschaltung (7) übermittelt, die diese Schaltinformation in ein entsprechendes Steuersignal zum Ansteuern des Schalters (S1) umsetzt,
**dadurch gekennzeichnet, dass**
die Steuerschaltung (6) den Strom (I_{L}) durch die Induktivität (I1) bzw. einen diesem Strom (I_{L}) entsprechenden Parameter erfasst und den Schalter (S1) bei einem erfassten Nulldurchgang des Induktivitätsstroms (I_{L}) einschaltet.

2. Elektronisches Vorschaltgerät nach Anspruch 1,
wobei wenigstens ein erfasster Betriebsparameter der Steuerschaltung die Eingangsspannung (Uᵢ) der Glättungsschaltung (3) ist.

3. Elektronisches Vorschaltgerät nach Anspruch 2,
bei dem die Einschaltzeitdauer des Schalters (S1) verlängert wird, wenn der aktuelle Wert der Eingangsspannung (Uᵢ) auf niedrige Werte absinkt.

4. Elektronisches Vorschaltgerät nach einem der vorhergehenden Ansprüche,
wobei Regeleigenschaften der Steuerschaltung (6) vom aktuellen Betriebszustand der Lampe (LA) abhängen.

5. Elektronisches Vorschaltgerät nach Anspruch 4,
wobei in unterschiedlichen Betriebszuständen die dynamischen Regeleigenschaften unterschiedlich sind.

6. Elektronisches Vorschaltgerät nach einem der vorhergehenden Ansprüche,
**dadurch gekennzeichnet,**
**dass** die Steuerschaltung (6) die Zwischenkreisspannung (UZ) erfasst.

7. Elektronisches Vorschaltgerät nach einem der vorherigen Ansprüche,
**dadurch gekennzeichnet,**
**dass** die Glättungsschaltung (3) durch einen Hochsetzsteller gebildet wird.

8. Elektronisches Vorschaltgerät nach einem der vorherigen Ansprüche,
**dadurch gekennzeichnet,**
**dass** die Steuerschaltung (6) einen weiteren Analog/DigitalWandler (ADC4) zum Umsetzen dieses Betriebsparameters in einen aus mindestens 2 bit bestehenden Digitalwert aufweist, auf Basis dieses Digitalwerts in einem weiteren digitalen Regelkreis (10) eine Schaltinformation zum Betreiben des Wechselrichters (4) berechnet und an die Treiberschaltung (7) übermittelt, welche diese Schaltinformation in ein entsprechendes Steuersignal zum Ansteuern des Wechselrichters (4) umsetzt.

9. Elektronisches Vorschaltgerät nach Anspruch 8,
**dadurch gekennzeichnet,**
**dass** die Steuerschaltung (6) die Lampenspannung erfasst.

10. Elektronisches Vorschaltgerät nach Anspruch 8 oder 9,
**dadurch gekennzeichnet,**
**dass** die Steuerschaltung (6) den Lampenstrom erfasst.

11. Elektronisches Vorschaltgerät nach einem der vorherigen Ansprüche,
**dadurch gekennzeichnet,**
**dass** die Steuerschaltung (6) zum Umsetzen aller erfassten Betriebsparameter einen einzigen im Zeitmultiplex arbeitenden Analog/Digital-Wandler aufweist.

12. Elektronisches Vorschaltgerät nach einem der vorherigen Ansprüche,
**dadurch gekennzeichnet,**
**dass** der bzw. die Analog/Digital-Wandler (ADC1-4) den bzw. die erfassten Betriebsparameter(Ui, I_{L}, U_{Z}) in Digitalwerte mit einer Genauigkeit von 12 bit umsetzen.

13. Elektronisches Vorschaltgerät nach einem der vorherigen Ansprüche,
**dadurch gekennzeichnet,**
**dass** die Steuerschaltung (6) einen Betriebszustands-Steuerblock (9) aufweist, wobei die Berechnung der Schaltinformation(en) zum Betrieben des Schaltreglers und/oder des Wechselrichters (4) in Abhängigkeit einer von dem Betriebszustands-Steuerblock (9) abgegebenen Betriebszustands-Information erfolgt.

14. Elektronisches Vorschaltgerät nach einem der vorherigen Ansprüche,
**dadurch gekennzeichnet,**
**dass** die Steuereinheit (6) einen Taktgeber (8) zum Übermitteln eines Taktsignales an die Komponenten (ADC1-4, 9-13) der Steuereinheit (6) aufweist.

15. Elektronisches Vorschaltgerät nach einem der vorherigen Ansprüche,
**dadurch gekennzeichnet,**
**dass** die Steuereinheit (6) als anwendungsspezifische integrierte Schaltung ausgebildet ist.

16. Elektronisches Vorschaltgerät nach einem der vorherigen Ansprüche,
**dadurch gekennzeichnet, dass** ein Speicher (12) vorgesehen ist, in dem eine Steuerinformation für den Schalter (S1) abgelegt ist.

17. Elektronisches Vorschaltgerät nach Anspruch 16, bei dem die Steuerinformation die erforderliche Einschaltzeitdauer oder das Tastverhältnis des Schalters (S1) beinhaltet.

## Claims

1. An electronic ballast for at least one gas discharge lamp (LA), with a rectifier circuit (2) connectable to an alternating voltage source (U₀), a smoothing circuit (3) connected to the output of the rectifier circuit (2) for generating an intermediate circuit voltage (U_{z}) and an inverter (4) fed with the intermediate circuit voltage (U_{z}), to the output of which a connection is connected for load circuit (5) containing lamp (LA), wherein the smoothing circuit (3) is formed by a switching regulator with an inductivity (L1) and the ballast also has a control circuit (6), which detects at least one operating parameter (Uᵢ, I_{L}, U_{z}) of the smoothing circuit (3) and actuates a controllable switch (S1) of the switching regulator depending on the value of the detected operating parameter (Uᵢ, I_{L}, U_{z}), in order to stabilize the intermediate circuit voltage (U_{z}), wherein the control circuit (6) has an analog/digital converter (ADC1) for converting the detected operating parameter (Uᵢ, I_{L}, U_{z}) of the smoothing circuit (3) into a digital value consisting of at least 2 bits,
wherein the control circuit (6) on the basis of this digital value in a digital control loop (14) calculates switching information for the operation of the controllable switch (S1) of the switching regulator and transmits it to a driver circuit (7), which converts this switching information into a corresponding control signal for the actuation of the switch (S1),
**characterized in that**
the control circuit (6) detects the current (I_{L}) through the inductivity (I;) or a parameter corresponding to this current (I_{L}) and switches on the switch (S1) during a detected zero crossing of the inductivity current (I_{L}).

2. An electronic ballast according to Claim 1, wherein at least one detected operating parameter of the control circuit is the input voltage (Uᵢ) of the smoothing circuit (3).

3. An electronic ballast according to Claim 2, in which the switch-on duration of the switch (S1) is extended, if the current value of the input voltage (Uᵢ) drops to low values.

4. An electronic ballast according to one of the preceding claims, wherein control characteristics of the control circuit (6) depend on the current operating status of the lamp (LA).

5. An electronic ballast according to Claim 4, wherein in different operating states the dynamic control characteristics are different.

6. An electronic ballast according to one of the preceding claims,
**characterized in**
**that** the control circuit (6) detects the intermediate circuit voltage (U_{z}).

7. An electronic ballast according to one of the preceding claims,
**characterized in**
**that** the smoothing circuit (3) is formed by a boost converter.

8. An electronic ballast according to one of the preceding claims,
**characterized in**
**that** the control circuit (6) has an additional analog/digital converter (ADC4) for converting this operating parameter into a digital value consisting of at least 2 bits, on the basis of this digital value in a further digital control loop (10) calculates switching information for the operation of the inverter (4) and transmits it to the drive circuit (7), which converts this switching information into a corresponding control signal for the actuation of the inverter (4).

9. An electronic ballast according to Claim 8,
**characterized in**
**that** the control circuit (6) detects the lamp voltage.

10. An electronic ballast according to Claim 8 or 9,
**characterized in**
**that** the control circuit (6) detects the lamp current.

11. An electronic ballast according to one of the preceding claims,
**characterized in**
**that** the control circuit (6) for the conversion of all detected operating parameters has a single analog/digital converter operating in the time multiplex.

12. An electronic ballast according to one of the preceding claims,
**characterized in**
**that** the analog/digital converter or converters (ADC1-4) convert the detected operating parameter or parameters (Uᵢ, I_{L}, U_{z}) into digital values with an accuracy of 12 bits.

13. An electronic ballast according to one of the preceding claims,
**characterized in**
**that** the control circuit (6) has an operating state-control block (9), wherein the calculation of the switching information for the operation of the switching regulator and/or the inverter (4) occurs in dependence on operating state-information provided by the operating state-control block (9).

14. An electronic ballast according to one of the preceding claims,
**characterized in**
**that** the control circuit (6) has a clock generator (8) for the transmission of a clock signal to the components (ADC1-4, 9-13) of the control circuit (6).

15. An electronic ballast according to one of the preceding claims,
**characterized in**
**that** the control circuit (6) is designed as a application specific integrated circuit.

16. An electronic ballast nit according to one of the preceding claims,
**characterized in that** a storage (12) is provided, in which control information for the switch (S1) is archived.

17. An electronic ballast according to Claim 16, in which the control information contains the required switch-on duration or the pulse-duty factor of the switch (S1).

## Revendications

1. Ballast électronique pour au moins une lampe à décharge de gaz (LA) avec un circuit redresseur (2) pouvant être connecté à une source de tension alternative (Uₒ), un circuit de lissage (3), connecté à la sortie du circuit redresseur (2), pour la génération d'une tension de circuit intermédiaire (U_{z}) et un onduleur (4) alimenté avec la tension de circuit intermédiaire (U_{z}), à la sortie duquel est connecté un circuit de charge (5) contenant des connecteurs pour la lampe (LA), le circuit de lissage (3) étant constitué par un régulateur de commutation avec une inductance (L1) et le ballast comprenant en outre un circuit de commande (6), qui mesure au moins un paramètre de fonctionnement (Uᵢ, I_{L}, U_{z}) du circuit de lissage (3) et commande un commutateur contrôlable (S1) du régulateur de commutation en fonction de la valeur du paramètre de fonctionnement (Uᵢ, I_{L}, U_{z}) afin de stabiliser la tension de circuit intermédiaire (U_{z}), le circuit de commande (6) comprenant un convertisseur analogique/numérique (ADC1) pour la conversion du paramètre de fonctionnement (Uᵢ, I_{L}, U_{z}) du circuit de lissage (3) en une valeur numérique constituée d'au moins 2 bits,
le circuit de commande (6) calculant, sur la base de cette valeur numérique, dans un circuit de régulation (14), une information de commutation pour le fonctionnement du commutateur contrôlable (S1) du régulateur de commutation et transmettant celle-ci à un circuit pilote (7) qui convertit cette information de commutation en un signal de commande correspondant pour la commande du commutateur (S1),
**caractérisé en ce que**
le circuit de commande (6) mesure le courant (I_{L}) à travers l'inductance (I1) ou un paramètre correspondant à ce courant (I_{L}) et active le commutateur (S1) lors de la détection d'un passage à zéro du courant de l'inductance (I_{L}).

2. Ballast électronique selon la revendication 1,
au moins un paramètre de fonctionnement mesuré du circuit de commande étant la tension d'entrée (Uᵢ) du circuit de lissage (3).

3. Ballast électronique selon la revendication 2,
dans lequel la durée d'activation du commutateur (S1) est prolongée lorsque la valeur actuelle de la tension d'entrée (Uᵢ) diminue vers des valeurs basses.

4. Ballast électronique selon l'une des revendications précédentes,
les propriétés de régulation du circuit de commande (6) dépendant de l'état de fonctionnement actuel de la lampe (LA).

5. Ballast électronique selon la revendication 4,
les propriétés de régulation dynamique étant différentes dans des états de fonctionnement différents.

6. Ballast électronique selon l'une des revendications précédentes,
**caractérisé en ce que**
le circuit de commande (6) mesure la tension de circuit intermédiaire (UZ).

7. Ballast électronique selon l'une des revendications précédentes, **caractérisé en ce que**
le circuit de lissage (3) est constitué d'un convertisseur élévateur.

8. Ballast électronique selon l'une des revendications précédentes,
**caractérisé en ce que**
le circuit de commande (6) comprend un convertisseur analogique/numérique supplémentaire (ADC4) pour la conversion de ce paramètre de fonctionnement en une valeur numérique constituée de 2 bits, calcule, sur la base de cette valeur numérique, dans un circuit de régulation numérique supplémentaire (10), une information de commutation pour le fonctionnement de l'onduleur (4) et la transmet au circuit pilote (7) qui convertit cette information de commutation en un signal de commande correspondant pour la commande de l'onduleur (4).

9. Ballast électronique selon la revendication 8,
**caractérisé en ce que**
le circuit de commande (6) mesure la tension de la lampe.

10. Ballast électronique selon la revendication 8 ou 9,
**caractérisé en ce que**
le circuit de commande (6) mesure le courant de la lampe.

11. Ballast électronique selon la revendication 8 ou 9,
**caractérisé en ce que**
le circuit de commande (6) comprend, pour la conversion de tous les paramètres mesurés, un seul convertisseur analogique/numérique fonctionnant avec un multiplexage dans le temps.

12. Ballast électronique selon l'une des revendications précédentes,
**caractérisé en ce que**
le ou les convertisseurs analogiques/numériques (ADC1-4) convertissent le ou les paramètres de fonctionnement (Uᵢ, I_{L}, U_{z}) en valeurs numériques avec une précision de 12 bits.

13. Ballast électronique selon l'une des revendications précédentes,
**caractérisé en ce que**
le circuit de commande (6) comprend un bloc de commande d'état de fonctionnement (9), le calcul de la ou des informations de commutation pour le fonctionnement du régulateur de commutation et/ou de l'onduleur (4) ayant lieu en fonction d'une information d'état de fonctionnement générée par le bloc de commande d'état de fonctionnement (9).

14. Ballast électronique selon l'une des revendications précédentes,
**caractérisé en ce que**
l'unité de commande (6) comprend une horloge (8) pour la transmission d'un signal d'horloge aux composants (ADC1-4, 9-13) de l'unité de commande (6).

15. Ballast électronique selon l'une des revendications précédentes,
**caractérisé en ce que**
l'unité de commande (6) est conçue comme un circuit intégré spécifique à l'application.

16. Ballast électronique selon l'une des revendications précédentes,
**caractérisé en ce que**
une mémoire (12) est prévue, dans laquelle est enregistrée une information de commande pour le commutateur (S1).

17. Ballast électronique selon la revendication 16,
dans lequel l'information de commande contient la durée d'activation nécessaire ou le rapport cyclique du commutateur (S1).
